# EUROPÄISCHE PATENTSCHRIFT

(11) **EP 1 599 921 B1**
(45) Veröffentlichungstag und Bekanntmachung des Hinweises auf die Patenterteilung: **28.11.2007**
(21) Anmeldenummer: 04707891.0
(22) Anmeldetag: 04.02.2004
(51) Int. Cl.: H01R 4/50, F16L 3/12

(54) **KABELKLEMMEN**
CABLE CLAMP
SERRE-CABLES

(30) Priorität: 25.02.2003 DE 10307835
(43) Veröffentlichungstag der Anmeldung: 30.11.2005
(73) Patentinhaber: A. RAYMOND ET CIE, 38000 Grenoble (FR)
(72) Erfinder: GELIBERT, Stéphane, F-38360 Sassenage (FR)
(74) Vertreter: Rüttgers, Joachim
(86) Internationale Anmeldenummer: PCT/EP2004/000988
(87) Internationale Veröffentlichungsnummer: WO 2004/077620

(56) Entgegenhaltungen:
- DE-B- 2 328 049
- DE-C- 19 504 253
- DE-C- 19 856 945
- FR-A- 2 130 753
- GB-A- 1 556 488

## Beschreibung

Die Erfindung betrifft eine einstückig ausgebildete Kabelklemme gemäß dem Oberbegriff des Patentanspruchs 1 sowie eine Kabelklemmvorrichtung mit mehreren Kabelklemmen.

Eine derartige Kabelklemme Ist aus der DE 198 56 945 C bekannt Diese einstückig ausgebildete Kabelklemme mit einem an einem Trägerteil befestigbaren U-förmigen Sockel und mit einer an dem Sockel ausgebildeten Auflagefläche für ein zu befestigendes Kabel oder Kabelbündel weist auf der Innenfläche eine quer verlaufende Riffelung mit Auflagefläche für ein zu befestigende Kabel oder Kabelbündel auf. An einer Oberkante des U-förmigen Sockels ist an einem biegsamen Band ein einrastbarer Klemmdeckel angebracht der zwischen die U-Schenkel einschiebar ist. Auf der anderen Seite ist ein Feststellglied verstellbar angeformt, das in zwei verschiedenen Stellungen an den Riffelungen der U-Schenkel in Eingriff steht. In einer Stellung ist der U-Schenkel geschlossen und in der anderen Stellung ist dieser Eingriff gelöst.

Eine weitere Kabelklemme ist durch die DE-PS 26 26 412 bekannt. Vom Klemmdeckel dieser Kabelklemme ragen zwei einander gegenüber stehende Schenkel senkrecht ab, deren Außenflächen sägezahnartig geriffelt sind. Im Sockel sind beidseitig der an ihm ausgebildeten Auflagefläche für das Kabel oder das Kabelbündel Öffnungen mit Rastmitteln vorgesehen. Nachdem ein Kabel oder Kabelbündel auf der Auflagefläche platziert wurde, wird der Klemmdekkel am Verbindungsband zwischen Klemmdeckel und Sockel umgebogen und seine Schenkel werden in die Öffnungen neben der Auflagefläche eingeschoben. Der Klemmdeckel kann soweit niedergedrückt werden, bis das Kabel oder Kabelbündel zwischen ihm und der Auflagefläche fest eingeklemmt ist und die Rastmittel der Öffnungen in entsprechender Höhe an den Riffelungen der Schenkel einrasten. Dazu sind die Schenkel so ausgebildet, dass sie beim Auftreffen auf dem Trägerteil sich unterhalb des Sockels nach innen umbiegen. So kann die Verrastung in beliebiger Höhe an den Schenkeln erfolgen und passt sich an unterschiedliche Durchmesser eines Kabels oder Kabelbündels an.

Durch die französische Patentschrift 2.130.753 ist eine zweiteilige Kabelklemme mit einem U-förmigen Grundkörper oder Sockel bekannt. Dabei bildet der gebogene Boden des U die Auflagefläche für das Kabel oder Kabelbündel und die Innenflächen beider U-Schenkel weisen eine quer verlaufende Riffelung auf. Ein separater Stößel mit im wesentlichen rechteckiger Grundfläche ist an seinen beiden Schmalseiten mit einer mit der Riffelung der U-Schenkel korrespondierenden Riffelung ausgestattet. Der Stößel weist außerdem eine mittige Öffnung mit Innengewinde auf, die an der Unterseite in eine Ausnehmung mündet, die geeignet ist, eine Druckplatte aufzunehmen. In die Öffnung ist eine Feststellschraube eingeschraubt, mit der die Druckplatte durch einen Dom festverbunden ist. Nachdem ein Kabel oder Kabelbündel auf die Bodenfläche des U-förmigen Grundkörpers aufgelegt worden ist, wird der Stößel zwischen die U-Schenkel eingeschoben, und dies geschieht, indem der Stößel dabei so gehalten wird, dass seine geriffelten Schmalseiten zu den geriffelten U-Schenkeln um 90° versetzt sind. Sobald die Unterseite des Stößels bzw. der in ihn noch eingezogenen Druckplatte mit dem Kabel oder Kabelbündel in Kontakt kommt, wird der Stößel um 90° gedreht, so dass die Riffelung des Stößels in die der U-Schenkel eingreift. Danach wird die Feststellschraube angezogen, wodurch die Druckplatte aus dem Stößel herausbewegt wird und sich mit Druck auf das Kabel bzw. Kabelbündel legt. Durch entsprechende Einkerbungen an der Unterseite der Druckplatte wird diese Kabelklemme für Kabel mit unterschiedlichem Durchmesser anwendbar gemacht. Nachteilig an dieser Kabelklemme ist, dass sie aus zwei separaten Teilen besteht, die nicht unverlierbar miteinander verbunden sind und außerdem die recht umständliche und zeitaufwendige Handhabung. Die Kabelklemme durch verschiedene Einkerbungen an der Unterseite des Stößels für verschiedene Kabeldurchmesser anwendbar zu machen, ist ebenfalls sehr aufwendig und verteuert die Herstellung. Dabei kann die Anpassung nur an die durch die Form der Einkerbungen vorgegebenen festen Durchmesser, also nicht kontinuierlich, erfolgen.

Aufgabe der Erfindung ist es, eine Kabelklemmen der eingangs genannten Art zu schaffen, die einfach und zuverlässig in ihrer Anwendung und Handhabung ist und die auch einfach und ohne Beschädigung wieder zu lösen und danach wieder verwendbar ist.

Ein Kabel soll von der Klemme in ihrem geschlossenen Zustand so fest gehalten werden, dass es darin, und damit auch in bezug auf das Trägerteil, nicht verschiebbar ist.

Es soll aber auch auf einfache Weise wieder demontierbar sein, ohne dass die Kabel selbst oder die Kabelklemme beschädigt werden. Außerdem soll die Möglichkeit geschaffen werden, mehrere Kabel mit unterschiedlichen Durchmessern bei minimalem Platzbedarf an einem Trägerteil unverschiebbar zu fixieren und auch wieder zu demontieren.

Dies wird erfindungsgemäß mit den Merkmalen des Patentanspruchs 1 erreicht.

Der Sockel ist U-förmig ausgebildet und seine U- Schenkel weisen an ihrer Innenfläche eine quer verlaufende Riffelung auf und der Boden des Sockels bildet die Auflagefläche für ein Kabel. Außerdem ist mit der Oberkante des einen U-Schenkels über ein biegsames Band ein Klemmdeckel verbunden, der zwischen die U-Schenkel einschiebbar ist und an dem ein Feststellglied verstellbar angeformt ist, das in zwei verschiedene Stellungen gebracht werden kann, in deren einer es an den Riffelungen der U-Schenkel in Eingriff steht und in deren anderer dieser Eingriff gelöst ist.

Damit wird die Handhabung der Kabelklemme äußerst einfach. Die beiden Teile, nämlich Sockel und Klemmdeckel, sind unverlierbar miteinander verbunden. Um ein in den Sockel eingelegtes Kabel festzuklemmen, wird das Feststellglied zunächst in die Stellung gedreht, in der kein Eingriff an den U-Schenkeln zustande kommen kann, und der Klemmdeckel zwischen die U-Schenkel geschoben. Sobald der auf dem Kabel möglichst mit Druck aufliegt, wird das Feststellglied mit der Riffelung in Eingriff gebracht. Indem dieser Eingriff auf ebenso einfache Weise gelöst wird, kann das Kabel wieder demontiert werden, ohne dass die Kabelklemme beschädigt bzw. unbrauchbar gemacht werden muss, sie bleibt wiederverwendbar. Auch die Gefahr, dass ein Kabel beim Demontieren beschädigt werden könnte, besteht praktisch nicht. Der Eingriff des Feststellgliedes an der Riffelung der U-Schenkel erfolgt entsprechend dem jeweiligen Kabeldurchmesser in unterschiedlicher Höhe, so dass eine selbsttätige Anpassung gegeben ist.

Vorzugsweise sind an dem Klemmdeckel seitliche, von der Unterseite vorstehende und aufeinander zugeneigte Klemmlappen angeformt. Diese umfassen das zu klemmende Kabel fest, so dass es schließlich unverschiebbar in der Kabelklemme gehalten ist. Indem sich die aufeinander zu geneigten Klemmlappen entsprechend aufspreizen, findet auch dabei automatisch eine Anpassung an unterschiedliche Kabeldurchmesser statt.

Nach einer bevorzugten Ausführungsform ist mit der Oberseite des Klemmdeckels über einen elastisch verdrehbaren Schaft ein schraubenkopfförmiges Feststellglied mit Betätigungsschlitz verbunden, von dem einander gegenüberliegend zwei Einrastflügel seitlich abragen, die durch Verdrehen des Feststellgliedes am Schaft in zwei verschiedene Stellungen zu bringen sind, in deren einer sie mit der Riffelung der U-Schenkel des Sockels in Eingriff stehen, und in deren anderer dieser Eingriff gelöst ist. Damit lässt sich sowohl der Klemmvorgang selbst als auch das Lösen des Eingriffs zur Demontage einfach mit einem Schraubenzieher bewerkstelligen.

Die Einrastflügel des Feststellgliedes können an ihren Seitenflächen mit einer Riffelnut versehen sein; ihr Eingriff kann dadurch sicherer gemacht werden.

Nach einer bevorzugten Ausführungsform verbindet das biegsame Band die Oberseite des Feststellgliedes mit der Oberkante eines U-Schenkels des Sockels.

Es ist von Vorteil, wenn an zwei sich diagonal gegenüberliegenden Seitenkanten der U-Schenkel des Sockel Anschläge für den Klemmdeckel angeformt sind, um zu verhindern, dass der Klemmdeckel seitlich aus dem Sockel herausgleiten kann.

An der Unterseite des Sockels ist ein Rastmittel, bevorzugt ein Rasthaken, angeformt, mit dem die Kabelklemme in einer entsprechenden Rastöffnung eines Trägerteils verankert werden kann.

Die aufeinander zugeneigten Klemmlappen des Klemmdeckels können jeweils eine Kante bilden, die beim Einführen des Klemmdeckels zwischen die U-Schenkel des Sockels an deren Riffelung diese berührend entlanggleiten. Dadurch kann ein leichter Eingriff der Kanten an der Riffelung entstehen, der einerseits so gering ist, dass er das Einführen des Klemmdeckels nicht behindert, andererseits aber ausreicht, um ein unbeabsichtigtes Zurückgleiten des Klemmdeckels während der Montage zu verhindern. Die Handhabung wird dadurch erleichtert.

Ein wesentlicher Vorteil der Erfindung ist, dass sich aus mehreren solcher Kabelklemmen eine platzsparende Klemmvorrichtung für mehrere Kabel, die einen unterschiedlichen Durchmesser haben können, bilden lässt. Dazu sind mehrere nebeneinander angeordnete Kabelklemmen an ihren U-Schenkeln mit der jeweils benachbarten Kabelklemme fest miteinander verbunden.

Eine solche bevorzugte Kabelklemmvorrichtung besteht aus vier einzelnen Kabelklemmen, die nebeneinander an ihren U-Schenkeln fest miteinander verbunden sind.

Vorzugsweise ist eine solche Kabelklemmvorrichtung einstückig hergestellt, und die U-Schenkel benachbarter Kabelklemmen sind vorzugsweise miteinander verschmolzen.

Bei einer aus mehreren, bevorzugt aus vier, einzelnen Kabelklemmen bestehenden Klemmvorrichtung ist an der Unterseite des Sockels nur der beiden äußeren Kabelklemmen ein Rasthaken zur Verankerung an einem Trägerteil angeformt.

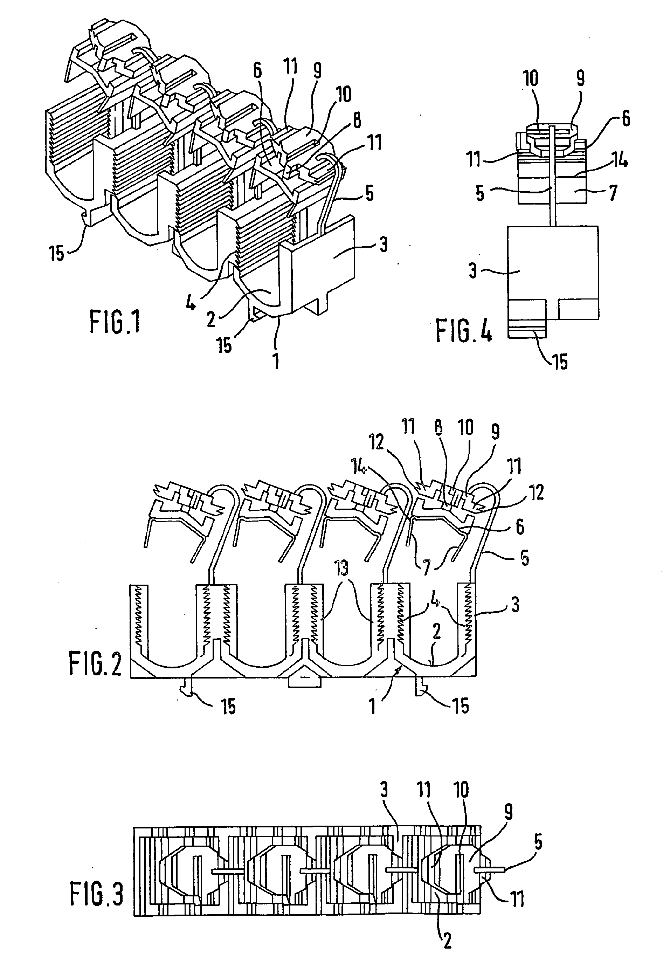

Die Erfindung wird im folgenden anhand der anhängenden Zeichnung beispielhaft genauer beschrieben; es zeigen
- Fig. 1: eine perspektivische Ansicht einer bevorzugten Ausführungsform einer Klemmvorrichtung, die aus vier Einheiten einer erfindungsgemäßen Kabelklemme besteht,
- Fig. 2: die Vorderansicht der Klemmvorrichtung nach Fig. 1,
- Fig. 3: die Draufsicht auf die Klemmvorrichtung nach Fig. 1 und
- Fig. 4: die Sicht auf eine Schmalseite der Klemmvorrichtung nach Fig. 1.

Die in der Zeichnung dargestellte Ausführungsform der Erfindung besteht aus vier gleichartigen Einheiten, von denen jede einzelne als Kabelklemme dienen kann, so dass es für das Verständnis zunächst ausreichend ist, nur eine der Einheiten als Kabelklemme genauer zu beschreiben.

Jede einzelne Kabelklemme besteht aus einem U-förmigen Grundkörper oder Sockel **1,** dessen Boden als Auflagefläche **2** für ein Kabel oder Kabelbündel ausgebildet ist und dessen U-Schenkel **3** an ihren Innenflächen mit einer quer verlaufenden, sägezahnförmigen Riffelung **4** versehen sind, was an sich bekannt ist. Mit der Oberkante des einen U-Schenkels **3** durch ein biegsames, in der dargestellten Ausführungsform fadenförmiges Band **5** ist der Klemmdeckel **6,** der durch seitlich angeformte Klemmlappen **7** ebenfalls annähernd U-Form hat. Diese Klemmlappen **7** sind leicht aufeinander zu gerichtet, was bei der Anwendung das Einführen des Klemmdeckels **6** in den U-förmigen Sockel **1** erleichtert. Die Klemmlappen **7** des Klemmdeckels **6** sind nicht geriffelt. Auf seiner von den Klemmlappen **7** abgewandten Seite ist der Klemmdeckel **6** über einen elastisch bieg- und verdrehbaren Schaft **8** mit einem schraubenkopfförmigen Feststellglied **9** verbunden. Dieses weist einen Betätigungsschlitz **10** auf, und seitlich an ihm sind zwei sich gegenüber liegende Einrastflügel **11** angeformt, die geeignet sind, mit den Riffelungen **4** der U-Schenkel **3** des Sockels **1** in Eingriff zu kommen und dazu seitlich etwas über den Klemmdeckel **6** hinausragen. Für den Eingriff können die Einrastflügel **11** an ihrer Seitenfläche eine Riffelung oder eine Riffelnut **12** aufweisen. Aufgrund des elastisch verdrehbaren Schafts **8** kann das Feststellglied **9** mit Hilfe eines geeigneten Werkzeugs, vorzugsweise mit einem Schraubenzieher, in bezug auf den Klemmdeckels **6** in eine Stellung, in der die Einrastflügel **11** mit der Riffelung 4 der U-Schenkel **3** in Eingriff kommen, und in eine andere Stellung verdreht werden, in der dieser Eingriff gelöst ist bzw. nicht zustande kommt.

Wenn ein Kabel oder Kabelbündel in den Sockel **1** eingelegt ist, wird der Klemmdeckel **6** zwischen die U-Schenkel **3** des Sockels **1** eingeführt und soweit niedergedrückt, bis er auf dem Kabel mit Druck aufliegt. Indem die Klemmlappen **7,** wie oben beschrieben, leicht aufeinander zu geneigt sind, entsteht an jedem von ihnen eine Kante **14,** die bei der Bewegung an der Riffelung **4** der U-Schenkel **3** entlang gleiten, dort auch in einen leichten Eingriff kommen können, ohne aber die Bewegung eigentlich zu behindern. Der leichte Eingriff der Kanten **14** an den Riffelungen **4** dient lediglich dazu, ein unbeabsichtigtes Herausgleiten des Klemmdeckels **6** während der Montage zu verhindern. Schließlich umfassen die Klemmlappen **7** das Kabel und klemmen es dabei ein. Dabei können die Klemmlappen **7** unterschiedlich weit gespreizt werden, so dass selbsttätig eine Anpassung an unterschiedliche Kabeldurchmesser erfolgt. Die unterschiedlichen Kabeldurchmesser liegen dabei vorzugsweise im Bereich von 4mm bis 11 mm.

Das Niederdrücken des Klemmdeckels **6** geschieht vorzugsweise schon mit Hilfe eines Schraubenziehers, der in den Betätigungsschlitz **10** des Feststellgliedes **9** eingreift und mit dem dabei das Feststellglied **9** in bezug auf den Klemmdeckel **6** und den Sockel **1** so verdreht wird, dass die Einrastflügel **11** nicht in die Riffelungen **4** der U-Schenkel **3** eingreifen können und die Bewegung nicht behindern. Wenn der Klemmdeckel **6** schließlich mit Druck auf dem Kabel aufliegt und die Klemmlappen **7** das Kabel fest umschließen, wird das Feststellglied **9** so verdreht, dass seine Einrastflügel **11** in die Riffelungen **4** eingreifen, wodurch das Kabel im Sockel **1** fixiert ist. Auch der Eingriff der Einrastflügel **11** an den Riffelungen **4** passt sich in der Höhe also dem jeweiligen Kabeldurchmesser an. Damit ist das Kabel unverschiebbar in der Kabelklemme gehalten. Damit der Klemmdeckel **6** nicht aus dem Sockel **1** an dessen offenen Seiten herausgleiten kann, ist an den Seitenkanten der U-Schenkel **3** einander diagonal gegenüberliegend je ein nach innen gerichteter Anschlag **13** angeformt.

Um die Kabelklemme zu lösen, wird das Feststellglied **9** durch erneutes Verdrehen wieder außer Eingriff gebracht und der Klemmdeckel **6** aus dem Sockel **1** herausgezogen, wobei die Kanten **14** der Klemmlappen **7** wiederum an den Riffelungen **4** entlang gleiten. Danach kann das Kabel ohne weiteres aus der Klemme herausgenommen werden. Weder Kabel noch Kabelklemme werden dabei beschädigt, beide bleiben wiederverwendbar.

Kabelklemmen, die einzeln verwendet werden, weisen an der Unterseite ihres Sockels **1** ein Rastmittel, z.B. in Form eines Rasthakens **15** auf, mit dem sie in einer entsprechenden Rastöffnung im Trägerteil verankert werden können.

Nach der Erfindung können mehrere der beschriebenen Kabelklemmen zu einer einstückigen Klemmvorrichtung verbunden sein. Nach der in der Zeichnung dargestellten, bevorzugten Ausführungsform sind vier gleichartige, nebeneinander angeordnete Kabelklemmen an ihren U-Schenkeln **3** fest miteinander verbunden, vorzugsweise im Gießverfahren verschmolzen. Rasthaken **15** zur Verankerung an einem Trägerteil sind dabei nur an den beiden außen liegenden Kabelklemmen erforderlich. Mit dieser Klemmvorrichtung können vier Kabel, wenn erforderlich mit unterschiedlichen Durchmessern, platzsparend und unverschiebbar an einem Trägerteil fixiert werden. Ebenso einfach wie die Kabel geklemmt werden, können sie ohne die Gefahr einer Beschädigung wieder demontiert werden, und die Klemmvorrichtung bleibt dabei, wie oben an der einzelnen Kabelklemme beschrieben, auch als Ganzes wiederverwendbar.

## Patentansprüche

1. Einstückig ausgebildete Kabelklemme mit einem an einem Trägerteil befestigbaren Sockel **(1),** einer an diesem Sockel **(1)** ausgebildeten Auflagefläche **(2)** für ein zu befestigendes Kabel oder Kabelbündel und einem mit dem Sockel **(1)** durch biegsames Band **(5)** verbundenen Klemmdeckel **(6),** der, das Kabel oder Kabelbündel fassend, an dem Sockel **(1)** einrastbar ist, wobei der Sockel **(1)** U-förmig ausgebildet ist und seine U- Schenkel **(3)** an ihrer Innenfläche eine quer verlaufende Riffelung **(4)** aufweisen und der Boden des Sockels **(1)** die Auflagefläche **(2)** für ein Kabel bildet, und wobei mit der Oberkante des einen U-Schenkels **(3)** über das biegsame Band **(5)** ein Klemmdeckel **(6)** verbunden ist, der zwischen die U- Schenkel **(3)** einschiebbar ist und wobei ein Feststellglied **(9)** am Klemmdeckel **(6)** verstellbar angeformt ist, das in zwei verschiedene Stellungen bringbar ist, in deren einer es an den Riffelungen **(4)** der U-Schenkel **(3)** in Eingriff steht und in deren anderer dieser Eingriff gelöst ist, **dadurch gekennzeichnet, dass** das Feststellglied **(8)** an dem Klemmdeckel **(6)** verdrehbar angeformt ist.

2. Kabelklemme nach Anspruch 1, **dadurch gekennzeichnet, dass** an dem Klemmdeckel **(6)** seitlich von der Unterseite vorstehende, aufeinander zugeneigte Klemmlappen **(7)** angeformt sind.

3. Kabelklemme nach Anspruch 1, **dadurch gekennzeichnet, dass** mit der Oberseite des Klemmdeckels **(6)** über einen elastisch verdrehbaren Schaft **(8)** ein schraubenkopfförmiges Feststellglied **(9)** mit Betätigungsschlitz **(10)** verbunden ist von dem einander gegenüberliegend zwei Einrastflügel **(11)** seitlich abragen, die durch Verdrehen des Feststellgliedes **(9)** am Schaft **(8)** in zwei verschiedene Stellungen zu bringen sind, in deren einer sie mit der Riffelung **(4)** der U-Schenkei **(3)** des Sockel **(1)** in Eingriff stehen, und in deren anderer dieser Eingriff gelöst ist.

4. Kabelklemme nach Anspruch 3, **dadurch gekennzeichnet, dass** die Einrastflügel **(11)** an ihren Seitenflächen mit einer Riffelnut **(12)** versehen sind.

5. Kabelklemme nach Anspruch 3, **dadurch gekennzeichnet, dass** das biegsame Band **(5)** die Oberseite des Feststellgliedes **(9)** mit der Oberkante eines U-Schenkels **(3)** des Sockels **(1)** verbindet.

6. Kabelklemme nach Anspruch 1, **dadurch gekennzeichnet, dass** an zwei sich diagonal gegenüberliegenden Seitenkanten der U-Schenkel **(3)** des Sockels **(1)** Anschläge **(13)** für den Klemmdekkel **(6)** angeformt sind.

7. Kabelklemme nach Anspruch 1, **dadurch gekennzeichnet, dass** an der Unterseite des Sockels **(1)** ein Rasthaken **(15)** angeformt ist, mit dem die Kabelklemme in einer entsprechenden Rastöffnung eines Trägerteils verankerbar ist.

8. Kabelklemme nach Anspruch 2, **dadurch gekennzeichnet, dass** die aufeinander zu geneigten Klemmlappen **(7)** des Klemmdekkels **(6)** jeweils eine Kante **(14)** bilden, die beim Einführen des Klemmdeckels **(6)** zwischen die U-Schenkel **(3)** an deren Riffelung **(4)** sie berührend entlang gleiten.

9. Kabelklemmvorrichtung, **dadurch gekennzeichnet, dass** sie aus mehreren nebeneinander angeordneten Kabelklemmen nach einem oder mehreren der vorangehenden Ansprüchen besteht, die an ihren U-Schenkeln **(3)** mit der jeweils benachbarten Kabelklemme fest miteinander verbunden sind.

10. Kabelklemmvorrichtung nach Anspruch 9, **dadurch gekennzeichnet, dass** sie aus vier nebeneinander angeordneten Kabelklemmen besteht, die an ihren U-Schenkeln **(3)** fest mit der jeweils benachbarten Kabelklemme verbunden sind.

11. Kabelklemmvorrichtung nach Anspruch 9 oder 10, **dadurch gekennzeichnet, dass** sie einstückig hergestellt ist und die U-Schenkel **(3)** benachbarter Kabelklemme miteinander verschmolzen sind.

12. Kabelklemmvorrichtung nach Anspruch 10, **dadurch gekennzeichnet, dass** an der Unterseite des Sockels **(1)** der beiden äußeren Kabelklemmen ein Rasthaken **(15)** zur Verankerung an einem Trägerteil angeformt ist.

## Claims

1. Cable clip of one-piece form having a base (1) able to be fastened to a carrier member, having a supporting surface (2) formed on the said base (1) for a cable or bundle of cables to be fastened in place, and having a clamping cover (6) which is connected to the base (1) by a flexible strip (5) and which, while gripping the cable or bundle of cables, can be engaged in the base (1), the base (1) being of a U-shaped form and the sides (3) of the U which it forms having on their inner faces transversely extending serrations (4) and the floor of the base (1) forming the supporting surface (2) for a cable, and a clamping cover (6) which can be inserted between the sides (3) of the U being connected to the top edge of one side (3) of the U by the flexible strip (5), and a locking member (9) being integrally formed on the clamping cover (6) in such a way as to be displaceable, the locking member (9) being able to be moved to two different positions, in one of which it is in engagement with the serrations (4) on the sides (3) of the U and in the other of which this engagement is released, **characterised in that** the locking member (8) is integrally formed on the clamping cover (6) in such a way as to be rotatable.

2. Cable clip according to claim 1, **characterised in that** integrally formed on the clamping cover (6) there are clamping lugs (7) which project laterally from the underside and which are inclined towards one another.

3. Cable clip according to claim 1, **characterised in that** there is connected to the upper side of the clamping cover (6), by an elastically rotatable stem (8), a locking member (9) in the form of a screw-head having an actuating slot (10), from which locking member (9) two engaging tongues (11) project laterally in positions opposite from one another, which engaging tongues (11) can be moved, by rotating the locking member (9) on its stem (8), to two different positions, in one of which they engage with the serrations (4) on the sides (3) of the U of the base (1) and in the other of which this engagement is released.

4. Cable clip according to claim 3, **characterised in that** the engaging tongues (11) are provided with a serrated groove (12) on their lateral surfaces.

5. Cable clip according to claim 3, **characterised in that** the flexible strip (5) connects the upper side of the locking member (9) to the top edge of one side (3) of the U of the base (1).

6. Cable clip according to claim 1, **characterised in that** abutments (13) for the clamping cover (6) are integrally formed on two diagonally opposed lateral edges of the sides (3) of the U of the base (1).

7. Cable clip according to claim 1, **characterised in that** a latching hook (15) by which the cable clip can be anchored in a corresponding latching aperture in a carrier member is integrally formed on the underside of the base (1).

8. Cable clip according to claim 2, **characterised in that** the clamping lugs (7) on the clamping cover (6), which are inclined towards one another, each form an edge (14) which, when the clamping cover (6) is inserted between the sides (3) of the U, slide along their serrations (4) in contact therewith.

9. Cable clip arrangement, **characterised in that** it comprises a plurality of cable clips according to one or more of the foregoing claims arranged next to one another, which cable clips are firmly connected to their respective adjacent cable clip or clips at the side or sides (3) of their U's.

10. Cable clip arrangement according to claim 9, **characterised in that** it comprises four cable clips arranged next to one another, which cable clips are firmly connected to their respective adjacent cable clip or clips at the side or sides (3) of their U's.

11. Cable clip arrangement according to claim 9 or 10, **characterised in that** it is produced in one piece and the sides (3) of the U's of adjacent cable clips are fused together.

12. Cable clip arrangement according to claim 10, **characterised in that** integrally formed on the underside of the base (1) of the two outer cable clips is a latching hook (15) for anchoring to a carrier member.

## Revendications

1. Attache de serrage de câbles de conception monobloc, comprenant un socle destiné à être fixé sur un élément faisant office de support, une portée d'assise ménagée sur ce socle pour un câble ou un faisceau de câbles à fixer et un étrier de serrage relié au socle par une bandelette souple qui, enserrant le câble ou le faisceau de câbles, est destiné à être amenée en prise d'accrochage avec le socle, **caractérisée en ce que** le socle (1) présente une configuration en forme d'arceau et, particularité en soi connue, **en ce que** les montants latéraux de ces arceaux (3) comportent, sur leur surface intérieure, des striures obliques (4) et que le fond du socle (1) définit la portée d'assise (2) pour un câble, **en ce qu'**en outre un étrier de serrage (6) est relié à l'arête supérieure d'un des montants latéraux (3) de l'arceau au moyen d'une bandelette souple (5), étrier qui est destiné à être inséré entre les montants latéraux de l'arceau et qui est muni d'un élément de blocage en position (9) déplaçable, réalisé solidaire de celui-ci par moulage, qui peut être amené dans deux positions différentes, à savoir une dans laquelle il est en prise d'encastrement avec les striures (4) des arceaux (3) et l'autre dans laquelle cette liaison d'accrochage est supprimée.

2. Attache de serrage de câbles selon la revendication 1, **caractérisée en ce que** des pattes de serrage (7) faisant saillie latéralement depuis la partie inférieure et orientées l'une vers l'autre sont réalisées solidaires par moulage de l'étrier de serrage (6).

3. Attache de serrage de câbles selon la revendication 1, **caractérisée en ce qu'**un élément de blocage en position (9) en forme de tête de vis, muni d'une fente d'actionnement (10), est relié à la partie supérieure de l'étrier de serrage (6) par une tige susceptible de pivoter par cédage élastique, depuis lequel s'étendent latéralement deux ailettes d'accrochage (11) respectivement opposées qui, lorsqu'on imprime au niveau de la tige (8) un mouvement de rotation à l'élément de blocage en position (9), peuvent être amenées dans deux positions différentes, à savoir une dans laquelle elles sont mises en prise d'encastrement avec les striures (4) des montants latéraux formant arceau (3) du socle (1) et l'autre dans laquelle cette liaison d'accrochage est supprimée.

4. Attache de serrage de câbles selon la revendication 3, **caractérisée en ce que** les ailettes d'accrochage (11) sont munies, au niveau de leurs faces latérales, d'une encoche crantée (12).

5. Attache de serrage de câbles selon la revendication 3, **caractérisée en ce que** la bandelette souple (5) relie la partie supérieure de l'élément de blocage en position (9) à l'arête supérieure d'un montant latéral (3) de l'arceau du socle (1).

6. Attache de serrage de câbles selon la revendication 1, **caractérisée en ce que** des butées (13) pour l'étrier de serrage (6) sont réalisées solidaires par moulage de deux arêtes latérales respectivement opposées en diagonale des montants latéraux formant arceau (3) du socle (1).

7. Attache de serrage de câbles selon la revendication 1, **caractérisée en ce qu'**un crochet d'encastrement (15) est réalisé solidaire par moulage de la face inférieure du socle (1), au moyen duquel l'attache de serrage de câbles est destinée à être ancrée dans une ouverture d'encastrement ménagée en correspondance dans un élément faisant office de support.

8. Attache de serrage de câbles selon la revendication 2, **caractérisée en ce que** les pattes de serrage (7) de l'étrier de serrage (6), obliquement orientées l'une vers l'autre, définissent respectivement une arête (14) qui, lors de l'insertion de l'étrier de serrage (6) entre les montants latéraux formant arceau (3) glissent le long de leurs striures (4) en ayant un contact avec elles.

9. Dispositif de serrage de câbles, **caractérisé en ce qu'**il se compose de plusieurs attaches de serrage de câbles disposées côte à côte, selon l'une ou plusieurs des revendications qui précèdent, qui sont de manière fixe reliées l'une à l'autre, au niveau de leurs montants latéraux formant arceau (3), par liaison avec l'attache de serrage de câbles respectivement attenante.

10. Dispositif de serrage de câbles selon la revendication 9, **caractérisé en ce qu'**il se compose de quatre attaches de serrage de câbles disposées côte à côte, qui sont de manière fixe raccordées, au niveau de leurs montants latéraux formant arceau (3), à l'attache de serrage de câbles respectivement attenante.

11. Dispositif de serrage de câbles selon la revendication 9 ou 10, **caractérisé en ce qu'**il est réalisé selon une configuration monobloc et que les arceaux (3) des attaches de serrage de câbles attenantes sont moulés d'un seul tenant.

12. Dispositif de serrage de câbles selon la revendication 10, **caractérisé en ce qu'**un crochet d'encastrement (15) est réalisé solidaire par moulage de la face inférieure du socle (1), au niveau des deux attaches de serrage de câbles correspondant aux positions extrêmes, pour permettre son ancrage dans un élément faisant office de support.
